# EUROPEAN PATENT APPLICATION

(11) **EP 4 496 109 A1**
(43) Date of publication of application: **22.01.2025**
(21) Application number: 23865895.9
(22) Date of filing: 15.09.2023
(51) Int. Cl.: H01M 50/533, H01M 50/54, H01M 50/172, H01M 50/105

(54) **ELECTRODE ASSEMBLY WITH ELECTRODE TAB JOINING STRUCTURE AND SECONDARY BATTERY COMPRISING SAME**

(30) Priority: 16.09.2022 KR 20220117334
(71) Applicant: LG Energy Solution, Ltd., Seoul 07335 (KR)
(72) Inventor: HONG, Kyungsik, Daejeon 34122 (KR); KIM, Yunjung, Daejeon 34122 (KR)
(74) Representative: Goddar, Heinz J.
(86) International application number: PCT/KR2023/013908
(87) International publication number: WO 2024/058599

(57) **Abstract**

The present invention relates to an electrode assembly having an electrode tab bonding structure and a secondary battery including the same, and more particularly, to an electrode assembly including a resin collector having metal layers deposited on a polymer layer, in which electrode tabs of different shapes are alternately stacked so that a conduction structure is formed, and in which conduction of electrons is facilitated in the direction of the electrode stacking even in the presence of the polymer layer, and a secondary battery including the electrode assembly.

## Description

### [Technical Field]

The present application claims the benefit of and priority to Korean Patent Application No. 10-2022-0117334, filed September 16, 2022, and all of the disclosures in that Korean patent application are hereby incorporated by reference as part of this specification.

The present invention relates to an electrode assembly having an electrode tab bonding structure and a secondary battery including the same, and more particularly, to an electrode assembly having an electrode tab bonding structure and including a resin collector having metal layers deposited on a polymer layer, in which electrode tabs of different shapes are alternately stacked so that a conduction structure is formed, and in which conduction of electrons is facilitated in the direction of the electrode stacking even in the presence of a polymer layer, and a secondary battery including the electrode assembly.

### [Background Art]

With the explosion of technology development and demand for mobile devices and automobiles, more research is being done on secondary batteries with high energy density, discharge voltage, and good output stability. Examples of such secondary batteries include lithium-based secondary batteries such as lithium-sulfur batteries, lithium ion batteries, and lithium ion polymer batteries. Furthermore, the above-mentioned secondary batteries can be categorized into cylindrical, prismatic, pouch-type, etc., according to their shape, and among them, interest in and demand for pouch-type battery cells are gradually increasing. Pouch-type battery cells can be stacked with high degree of integration and have a high energy density per weight, and are also inexpensive and easy to deform. Therefore, pouch-type battery cells can be fabricated into shapes and sizes that are applicable to a variety of mobile devices and automobiles.

These pouch-type battery cells typically have a stacked structure of a number of unit cells each of which includes an anode, a cathode, and a separator interposed between the anode and cathode (i.e, electrode assembly or stack cells), which can be produced by housing the electrode assembly in a battery case and then injecting an electrolyte, or by having a solid electrolyte within the electrode assembly from the outset.

Then, within the electrode assembly, an anode active material or a cathode active material is applied and positioned on the electrode collector for conduction of current, and in recent years, to increase the energy density and improve the stability of the battery, A lightweight resin collector with a metal layer deposited on a polymer layer made of polyimide (PI) or polyethylene terephthalate (PET) has been developed and applied to batteries.

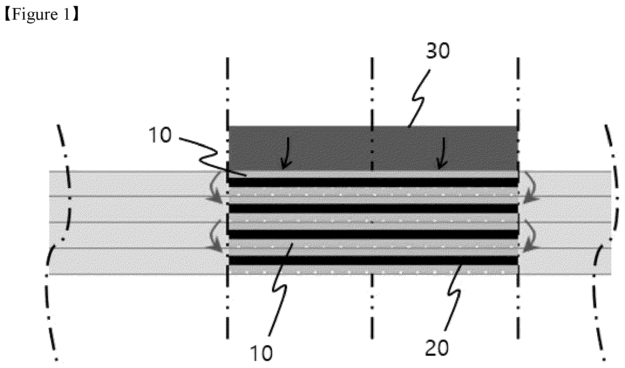

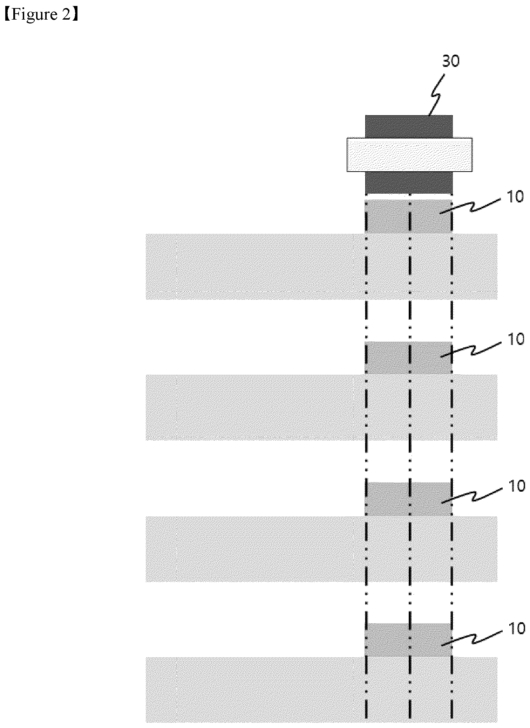

When assembling cells in stack using such a resin collector, bonding between electrode tabs and bonding between electrode tabs and lead tabs is necessary. FIG. 1 is a front view of a structure in which electrode tabs and a lead tab of a resin collector are bonded in a conventional manner, viewed from the withdrawal direction of the electrode tabs; and FIG. 2 is a plan view schematically illustrating a stacking and bonding position of the electrode tabs and the lead tab of the resin collector when the electrode tabs and lead tab are bonded together in a conventional manner. In other words, even when assembling cells in stack using a resin collector, the electrode tabs and lead tab of the resin collector are simply stacked and bonded in a conventional manner, as shown in FIGS. 1 and 2.

In this case, conduction of electrons is facilitated by the metal layers 10 of the resin collector in the planar direction of the electrode, but since the polymer layers 20 of the resin collector is non-conductive, conduction of electrons is inevitably poor in the direction of the electrode stacking through-plane (in FIG. 1, the arrow indicates a path for electron transfer, albeit weakly). This results in a difference in resistance between the electrodes in contact with the lead tab 30 and the other electrodes, which inevitably leads to poor battery performance during high rate charging and discharging.

Therefore, it is necessary to apply a resin collector having metal layers deposited on polymer layers as an electrode collector for the purpose of increasing the energy density and improving the stability of a battery, but to seek a method to improve the performance of the battery by smoothing the conduction of electrons in the direction of the electrode stacking even in the presence of the polymer layers, thereby eliminating or minimizing the resistance difference between the electrodes.

### [Disclosure]

### [Technical Problem]

Accordingly, it is an object of the present invention to provide an electrode assembly having an electrode tab bonding structure and including a resin collector having metal layers deposited on a polymer layer, in which electrode tabs of different shapes are alternately stacked so that a conduction structure is formed, and in which conduction of electrons is facilitated in the direction of the electrode stacking even in the presence of a polymer layer, and a secondary battery including the electrode assembly.

### [Technical Solution]

In order to achieve the above objectives, the present invention provides an electrode assembly, comprising: A-type electrode tabs located bias to the left of a center line of a longitudinal direction of a center bonding portion between electrode tabs; and B-type electrode tabs located bias to the right of the center line, wherein the A-type electrode tabs and the B-type electrode tabs are alternately positioned, and the A-type electrode tabs and the B-type electrode tabs are partially overlapped to form the center bonding portion, wherein remaining portions of the A-type electrode tabs and the B-type electrode tabs that do not form the center bonding portion form a structure in which side bonding portions each with a same type of electrode tabs are formed, and wherein the A-type electrode tabs and B-type electrode tabs each have a structure in which a polymer layer is interposed between two metal layers.

Further, the present invention provides a secondary battery comprising: the electrode assembly having the electrode tab bonding structure; and an accommodating case for receiving the electrode assembly.

### [Advantageous Effects]

According to the present invention, an electrode assembly having a bonding structure of electrode tabs and a secondary battery including the same is provided in which, electrode tabs of different shapes are stacked alternately in the electrode assembly so that a conduction structure is formed in the electrode assembly having a resin collector with metal layers deposited on polymer layers so as to provide a bonding structure for the electrode tabs, in which the conduction of electrons is facilitated in the direction of the electrode stacking even in the presence of polymer layers.

### [Description of Drawings]

FIG. 1 is a front view of a structure in which electrode tabs and a lead tab of a resin collector are bonded in a conventional manner, viewed from the withdrawal direction of the electrode tabs.
FIG. 2 is a plan view schematically illustrating a stacking and bonding position of the electrode tabs and the lead tab of the resin collector when the electrode tabs and lead tab are bonded together in a conventional manner.
FIG. 3 is a front view of a structure in which electrode tabs of different shapes are alternately stacked so that a conductive structure is formed according to an embodiment of the present invention, viewed from a withdrawal direction of the electrode tabs.
FIG. 4 is a plan view schematically illustrating a stacking and bonding position of the electrode tabs and lead tab of a resin collector when the electrode tabs and lead tab are bonded, according to an embodiment of the present invention.

### [Best Mode]

Hereinafter, the present invention will be described in detail with reference to the accompanying drawings.

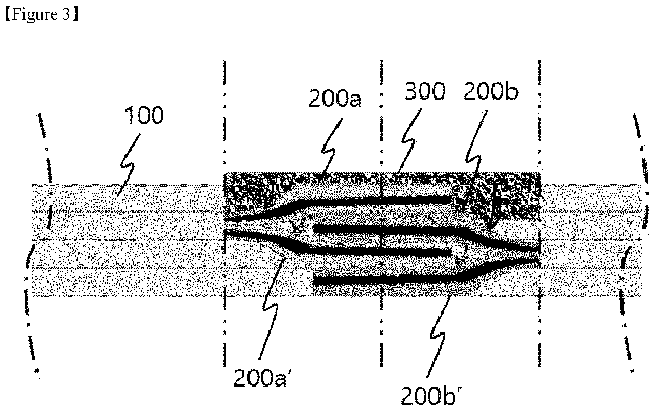

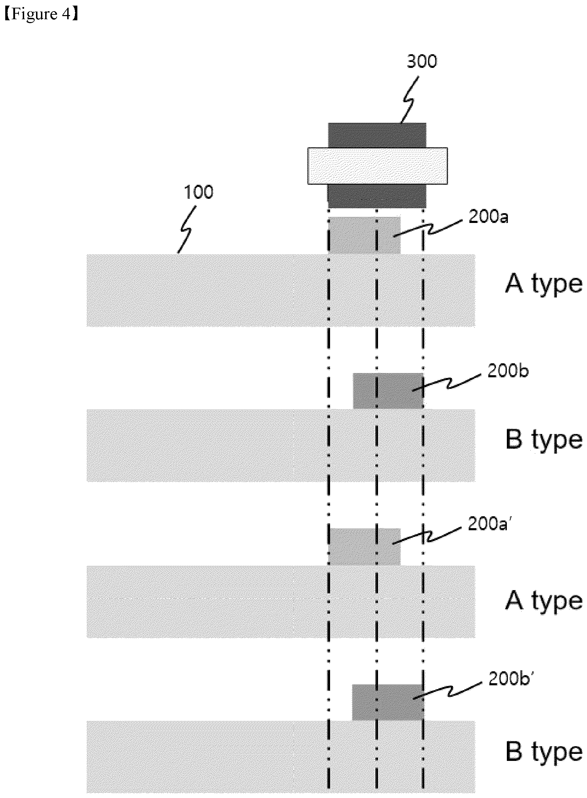

FIG. 3 is a front view of a structure in which electrode tabs of different shapes are alternately stacked so that a conductive structure is formed according to an embodiment of the present invention, viewed from a withdrawal direction of the electrode tabs; and FIG. 4 is a plan view schematically illustrating a stacking and bonding position of the electrode tabs and lead tab of a resin collector when the electrode tabs and lead tab are bonded, according to an embodiment of the present invention.

An electrode assembly having a bonding structure of electrode tabs according to the present invention, as shown in FIG. 3, includes A-type electrode tabs 200a, 200a' located bias to the left of a longitudinal centerline of a center bonding portion between electrode tabs; B-type electrode tabs 200b, 200b' located bias to the right of the centerline, wherein the A-type electrode tabs 200a, 200a' and B-type electrode tabs 200b, 200b' are alternately positioned, and the A-type electrode tabs 200a, 200a' and B-type electrode tabs 200b, 200b' are partially overlapped to form the center bonding portion, the remaining portions of the A-type electrode tabs 200a, 200a' and B-type electrode tabs 200b, 200b' that do not form the center bonding portion form a structure in which side bonding portions each with a same type of electrode tabs 200a, 200a' and 200b, 200b' are formed, and wherein the A type electrode tabs 200a, 200a' and B type electrode tabs 200b, 200b' each have a structure in which a polymer layer is interposed between two metal layers.

Among secondary batteries, pouch-type battery cells typically have a stacked structure of multiple unit cells each of which includes an anode, a cathode, and a separator interposed between the anode and cathode (i.e., an electrode assembly or stack cells), which can be produced by accommodating the electrode assembly in a battery case and then injecting an electrolyte, or by having a solid electrolyte within the electrode assembly from the outset. Within the electrode assembly, an anode active material or a cathode active material is applied and positioned on the electrode collector for the conduction of current. Meanwhile, in recent years, to increase the energy density and improve the stability of the batteries, lightweight resin collectors with metal layers deposited on polymer layers, such as polyimide (PI) or polyethylene terephthalate (PET), have been developed and applied to batteries. When assembling stack cells using these resin collectors, bonding between electrode tabs and bonding between electrode tabs and lead tabs is required. In other words, even when assembling stack cells using resin collectors, the electrode tabs and lead tabs of the resin collector are simply stacked and bonded in a conventional manner, as shown in FIGS. 1 and 2.

In this case, conduction of electrons is facilitated by the metal layer 10 of the resin collector in the planar direction of the electrode, but since the polymer layer 20 of the resin collector is non-conductive, conduction of electrons is inevitably poor in the through-plane direction of the electrode stacking (in FIG. 1, the arrow indicates a path for electron transfer, albeit weakly). This results in a difference in resistance between the electrodes in contact with the lead tab 30 and the other electrodes, which inevitably leads to poor battery performance during high rate charging and discharging.

Accordingly, the present inventors have invented an electrode assembly that can improve the performance of a battery by increasing the energy density and stability of the battery, by applying a resin collector coated with metal layers on polymer layers as a collector, and by facilitating the conduction of electrons in the direction of electrode stacking even in the presence of the polymer layers, thereby eliminating or minimizing the resistance difference between the electrodes.

The present invention has a key feature in the structure or shape of electrode tabs 200 that extends and protrudes from a collector (specifically, a resin collector containing a non-conductive polymer layer and a conductive metal layer) included in a unit cell 100 and is bonded to a lead tab 300 made of metal. That is, by forming the electrode tabs 200 in the shape shown in FIG. 3, the metal layers contained in each of the plurality of electrode tabs 200 can contact each other, and accordingly, facilitate the conduction of electrons in the direction of electrode stacking, thereby eliminating or minimizing the resistance difference between the electrodes and improving the performance of the battery compared to the conventional case (the arrows in FIG. 3 indicate the conduction path of electrons).

The A-type electrode tabs 200a, 200a' and the B-type electrode tabs 200b, 200b' have a shape that extends and protrudes from the collector included in each unit cell 100 of the electrode assembly. Therefore, the collector also has a structure that has a polymer layer interposed between two metal layers.

Meanwhile, with respect to the stacking direction of the aforementioned electrode tabs 200a, 200b, 200a', 200b', a lead tab 300 is arranged at the outermost part of the electrode tab assembly that includes the A-type electrode tabs 200a, 200a' and B-type electrode tabs 200b, 200b' or between the electrode tab assemblies.

The A-type electrode tabs 200a, 200a' have, based on the vertical cross-section viewed from the direction where the electrode tabs 200 are drawn out as shown in FIG. 3, one end positioned to coincide with one end of the lead tab 300 and the other end positioned between the other end and the center portion of the lead tab 300, although not limited thereto. Also, the B-type electrode tabs 200b, 200b' can be positioned in a shape that is symmetrical to the A-type electrode tabs 200a, 200a' as shown in FIG. 3, although not limited thereto.

Furthermore, the A-type electrode tabs 200a, 200a' and the B-type electrode tabs 200b, 200b' have a shape that are alternately stacked one by one as shown in FIGS. 3 and 4. At this time, the A-type electrode tabs 200a, 200a' and the B-type electrode tabs 200b, 200b' are partially overlapped to form a center bonding portion.

In addition, in order to form a conduction structure between the lead tab 300 and all the electrode tabs 200 and facilitate the conduction of electrons, same type of electrode tabs 200a, 200a', or 200b, 200b' should have a shape that is pressed in units of two sheets in the direction of one end of the lead tab 300. At this time, one sheet of a different type of electrode tab is interposed between them. Therefore, by forming a side bonding portion by pressing the same type of electrode tabs together, they form a shape that interposes a different type of electrode tab between them, and the metal layers contained in each of the same type of electrode tabs contact each other at the side bonding portion. At this time, a leading edge of the side bonding portion can be positioned to coincide with one end of the lead tab as shown in FIG. 3, although not limited thereto.

In other words, if the same type of electrode tabs 200a, 200a', or 200b, 200b' have a shape that are pressed in units of two sheets in the direction of one end of the lead tab 300, the metal layers contained in each of the same type of electrode tabs contact each other at the portion that has the pressed shape (side bonding portion). Also, because one sheet of a different type of electrode tab is interposed between the same type of electrode tabs 200a, 200a', or 200b, 200b' by way of the pressed shape, the metal layers of different types of electrode tabs also face and contact each other.

Therefore, by contacting the metal layers through the side bonding portion, the same type of electrode tabs contact each other, and by contacting the metal layers through the center bonding portion, different types of electrode tabs (for example, 200a and 200b, 200b and 200a', 200a' and 200b') contact each other, thereby forming a continuous conduction structure between all the electrode tabs including the A-type electrode tabs 200a, 200a' and the B-type electrode tabs 200b, 200b'. And accordingly, a continuous conduction structure is formed between the lead tab 300 and all the electrode tabs, and the conduction of electrons is smoothly performed. Therefore, one or more of the A-type electrode tabs 200a, 200a' and the B-type electrode tabs 200b, 200b' should be provided in even numbers.

The A-type electrode tabs 200a, 200a' and the B-type electrode tabs 200b, 200b', based on the vertical cross-section viewed from the direction where the electrode tabs 200 are drawn out, may be each overlapped with each other by a width of more than 50% and less than or equal to 80%, preferably 60% to 80%, more preferably 70% to 80%, based on the width of the lead tab 300. If the width of each of the A-type electrode tabs 200a, 200a' and the B-type electrode tabs 200b, 200b' is less than or equal to 50% based on the width of the lead tab 300, it may not be easy to facilitate contact between different types of electrode tabs. In other words, the center bonding portion may not be formed, and it may be difficult for the A-type electrode tabs 200a, 200a' and the B-type electrode tabs 200b, 200b' to contact through the metal layer. Furthermore, if the width of each of the A-type electrode tabs 200a, 200a' and the B-type electrode tabs 200b, 200b' exceeds 80% based on the width of the lead tab 300, unnecessary parts that do not contact between different types of electrode tabs may occur, and this may be disadvantageous in terms of cost.

Also, the lead tab 300 may only physically contact the A-type electrode tab 200a, but as shown in FIG. 3, if the lead tab 300 physically contacts both the A-type electrode tab 200a and the B-type electrode tab 200b, the conduction of electrons can be more smooth. In other words, it is preferable that the lead tab 300 contacts one of the A-type electrode tabs and one of the B-type electrode tabs that are positioned to face each other. And at the same time, by contacting the lead tab 300 to the entire end cross-section of the unpressed A-type electrode tab 200a as shown in FIG. 3, the conduction of electrons can be more smooth.

Hereinafter, referring to FIG. 3, the A-type electrode tabs 200a, 200a' and the B-type electrode tabs 200b, 200b' will be described in more detail as an embodiment. FIG. 3 shows an electrode assembly consisting of only two sheets of A-type electrode tabs 200a, 200a' and two sheets of B-type electrode tabs 200b, 200b'. In the following embodiment, the two sheets of A-type electrode tabs 200a, 200a' are denoted as the first electrode tab 200a and the third electrode tab 200a', and the two sheets of B-type electrode tabs 200b, 200b' are denoted as the second electrode tab 200b and the fourth electrode tab 200b'.

In case the electrode assembly of the present invention includes only four electrode tabs, the electrode tabs included in the electrode assembly comprises:
- a first electrode tab 200a that contacts the lead tab 300 face-to-face, and has one end positioned to coincide with one end of the lead tab 300 and the other end positioned between the other end and the center portion of the lead tab 300,
- a second electrode tab 200b that has a shape symmetrical to the first electrode tab 200a, and contacts a part of the other side of the first electrode tab 200a that does not face the lead tab 300,
- a third electrode tab 200a' that has the same shape as the first electrode tab 200a and a shape symmetrical to the second electrode tab 200b, and contacts a part of the other side of the second electrode tab 200b that does not face the first electrode tab 200a, and
- a fourth electrode tab 200b' that has the same shape as the second electrode tab 200b and a shape symmetrical to the first electrode tab 200a, and contacts a part of the other side of the third electrode tab 200a' that does not face the second electrode tab 200b.

(That is, in case the A-type electrode tabs include the first electrode tab and the third electrode tab and the B-type electrode tabs include the second electrode tab and the fourth electrode tab, the first electrode tab contacts the lead tab face-to-face, and the second electrode tab, the third electrode tab, and the fourth electrode tab are sequentially positioned on the other side of the first electrode tab that does not face the lead tab)

Furthermore, the one end of the first electrode tab 200a that is positioned to coincide with one end of the lead tab 300 and the one end of the third electrode tab 200a' are pressed in a shape that interposes the second electrode tab 200b between them, and the metal layer of the first electrode tab 200a and the metal layer of the third electrode tab 200a' contact at the pressed portion. That is, by way of a pressed shape at the one end of the first electrode tab 200a and the one end of the third electrode tab 200a', the metal layers facing each other of the first electrode tab 200a and the third electrode tab 200a' contact each other, and the metal layers not facing each other of the first electrode tab 200a and the third electrode tab 200a' can also contact each other.

And, the one end of the second electrode tab 200b that is positioned to coincide with the other end of the lead tab 300 and the one end of the fourth electrode tab 200b' are pressed in a shape that interposes the third electrode tab 200a' between them, and the metal layer of the second electrode tab 200b and the metal layer of the fourth electrode tab 200b' contact at the pressed portion. That is, by having a pressed shape at the one end of the second electrode tab 200b and the one end of the fourth electrode tab 200b', the metal layers facing each other of the second electrode tab 200b and the fourth electrode tab 200b' contact each other, and the metal layers not facing each other of the second electrode tab 200b and the fourth electrode tab 200b' can also contact each other.

Also, the lead tab 300 may only physically contact the first electrode tab 200a, but as shown in FIG. 3, if the lead tab 300 physically contacts both the first electrode tab 200a and the second electrode tab 200b, the conduction of electrons can be more smooth. And at the same time, by contacting the lead tab 300 to the entire end cross-section of the unpressed first electrode tab 200a as shown in FIG. 3, the conduction of electrons can be more smooth. Meanwhile, for convenience of description, an electrode assembly consisting of four electrode tabs was exemplified, but it will be readily understood to those skilled in the art that a plurality of electrode tabs can be additionally stacked. For example, on the other side of the fourth electrode tab 200b' that does not face the third electrode tab 200a', a plurality of A-type electrode tabs and B-type electrode tabs can be alternately included.

Hereinafter, a secondary battery according to the present invention will be described. The secondary battery includes the electrode assembly of the present invention described above and a case that accommodates the electrode assembly. The secondary battery is not limited to any particular use. The secondary battery may be any battery that can accommodate the electrode assembly in a storage case such as a pouch, but it may be desirable to use a lithium-based secondary battery.

In case the lithium secondary battery is a lithium-sulfur battery, the cathode active material may include sulfur, including sulfur-carbon composites that also include carbon materials. If the above lithium secondary battery is a lithium-ion battery, examples of cathode active materials include lithium cobalt oxide (LiCoO₂), lithium nickel oxide (LiNiO₂), lithium manganese oxide (LiMnO₂, LiMn O₂₄, etc.), lithium iron phosphate (LiFePO₄), and lithium nickel cobalt manganese-based cathode active materials (or lithium NCM-based cathode active materials, or NCM-based lithium composite transition metal oxides, or High Ni cathode materials). In addition to the cathode active material, the cathode also includes a binder and a conductive material.

The binder is a component that assists the binding of the cathode active material, conductive material, and other components to the collector. Examples of binders that can be used include polyvinylidene fluoride (PVdF), polyvinylidene fluoride-hexafluoropropylene copolymer (PVdF/HFP), polyvinyl acetate, polyvinyl alcohol, polyvinyl ether, polyethylene, polyethylene oxide, alkylated polyethylene oxide, polypropylene, polymethyl (meth)acrylate, polyethyl (meth)acrylate, polytetrafluoroethylene (PTFE), polyvinyl chloride, polyacrylonitrile, polyvinylpyridine, polyvinylpyrrolidone, styrene-butadiene rubber, acrylonitrile-butadiene rubber, ethylene-propylene-diene monomer (EPDM) rubber, sulfonated EPDM rubber, styrene-butylene rubber, fluorine rubber, carboxymethyl cellulose (CMC), starch, hydroxypropyl cellulose, regenerated cellulose, and mixtures thereof. However, this is not an exhaustive list of binders that can be used .

The binder is typically added in an amount of 1 to 50 parts by weight, preferably 3 to 15 parts by weight, based on a total weight of 100 parts by weight of the cathode. If the content of the binder is less than 1 part by weight, the adhesion of the cathode material to the collector may be insufficient, and if the content is greater than 50 parts by weight, the adhesion may be improved, but the content of the cathode material may be reduced, resulting in a lower battery capacity.

Conductive materials that are included in the cathode of the battery must have excellent electrical conductivity without causing any side reactions or chemical changes to the battery's internal environment. There are no specific limitations on the type of conductive material that can be used, but some examples include graphite or conductive carbon, for example, carbon such as natural graphite and artificial graphite; carbon black such as carbon black, acetylene black, Ketjen black, Denka black, thermal black, channel black, furnace black, and lamp black; carbonaceous materials with a crystal structure of graphene or graphite; conductive fibers such as carbon fibers or metal fibers; fluorinated carbon; metal powders such as aluminum powder or nickel powder; conductive whiskers such as zinc oxide or potassium titanate whiskers; conductive oxides such as titanium oxide; and conductive polymers such as polyphenylene derivatives. These materials can be used alone or in combination with two or more other materials, although not limited thereto.

The conductive materials are typically added to the cathode in a range of 0.5 to 50 parts by weight per 100 parts by weight of the total cathode, preferably 1 to 30 parts by weight. If the content of conductive material is less than 0.5 parts by weight, it may be difficult to expect an improvement in electrical conductivity or the electrochemical characteristics of the battery may be degraded. If the content of conductive material exceeds 50 parts by weight, the amount of cathode material decreases relatively, which can lead to a decrease in capacity and energy density of the battery. There are no specific limitations on how to include conductive materials in the cathode, and conventional methods such as coating the cathode material can be used. Additionally, if necessary, a second coating layer with conductivity can be added to the cathode material instead of adding conductive materials such as those mentioned above.

A component that can suppress the expansion of the electrode can be selectively added to the cathode as a filler. There are no specific limitations on the type of filler that can be used, as long as it does not cause any chemical changes to the battery and can suppress the expansion of the electrode. Examples of fillers include polyethylene and polypropylene, which are olefin polymers, and fibrous materials such as glass fibers and carbon fibers.

The cathode material, binder, and conductive material can be dispersed in a solvent to create a slurry. The slurry is then coated onto the cathode collector and dried and rolled to fabricate the cathode. Examples of solvents that can be used include N-methyl-2-pyrrolidone (NMP), dimethyl formamide (DMF), dimethyl sulfoxide (DMSO), ethanol, isopropanol, water, and mixtures thereof.

The cathode collector can be made of a variety of materials, including platinum (Pt), gold (Au), palladium (Pd), iridium (Ir), silver (Ag), ruthenium (Ru), nickel (Ni), stainless steel (STS), aluminum (Al), molybdenum (Mo), chromium (Cr), carbon (C), titanium (Ti), tungsten (W), ITO (In doped SnO₂), FTO (F doped SnO₂), and their alloys. Additionally, the surface of aluminum or stainless steel can be treated with carbon (C), nickel (Ni), titanium (Ti), or silver (Ag). The cathode collector can take the form of a foil, film, sheet, punched material, porous material, or foam.

The anode can be fabricated by conventional methods known in the art. For example, a slurry can be prepared by dispersing and mixing an anode active material, a conductive material, a binder, and optionally a filler in a solvent, and then coating the slurry on an anode collector and drying and rolling it to fabricate the anode. The anode active material may be a compound capable of reversible intercalation and deintercalation of lithium. Specific examples include carbonaceous materials such as artificial graphite, natural graphite, graphitized carbon fiber or amorphous carbon; metal compounds capable of alloying with lithium such as Si, Al, Sn, Pb, Sb, Zn, Bi, In, Mg, Ga, Cd, Si alloys, Sn alloys or Al alloys; metal oxides capable of doping and dedoping lithium such as SiO_{β}(0 < β < 2), SnO₂, vanadium oxide, lithium vanadium oxide; or composites comprising the metal compound and the carbonaceous material such as Si-C composite or Sn-C composite. Any one or more mixtures thereof may be used. Also, a metallic lithium film may be used as the anode active material. In addition, both low-crystalline carbon and high-crystalline carbon can be used as the carbon material. Representative examples of low-crystalline carbon include soft carbon and hard carbon. Representative examples of high-crystalline carbon include amorphous, flake, needle-like, spherical or fibrous natural or artificial graphite, Kish graphite, pyrolytic carbon, mesophase pitch based carbon fiber, meso-carbon microbeads, mesophase pitches and petroleum or coal tar pitch derived cokes.

Also, the binder and conductive material used for the anode may be the same as those described for the cathode. The anode collector may be made of platinum (Pt), gold (Au), palladium (Pd), iridium (Ir), silver (Ag), ruthenium (Ru), nickel (Ni), stainless steel (STS), copper (Cu), molybdenum (Mo), chromium (Cr), carbon (C), titanium (Ti), tungsten (W), ITO (In doped SnO₂), FTO (F doped SnO₂), and their alloys, or the one which is surface-treated with carbon (C), nickel (Ni), titanium (Ti) or silver (Ag) on the surface of copper (Cu) or stainless steel, but are not limited thereto. The anode collector may have a shape of foil, film, sheet, punched, porous, or foamed.

The separator may be made of olefinic polymers such as polyethylene, polypropylene, glass fibers, etc. in the form of sheets, multilayers, micro-porous films, woven fabrics, and non-woven fabrics, but are not limited thereto. However, it may be desirable to use porous polyethylene or porous glass fiber non-woven fabric (glass filter) as the separator, and it may be more desirable to use porous glass filter (glass fiber non-woven fabric) as the separator.

On the other hand, when polymer such as a solid electrolyte (for example, organic solid electrolyte, inorganic solid electrolyte, etc.) is used as the electrolyte, the solid electrolyte may also serve as the separator. Specifically, a thin film of an insulating material with high ion permeability and mechanical strength is used. The pore diameter of the separator may typically range from 0.01 to 10 µm, and the thickness may typically range from 5 to 300 µm, but are not limited thereto.

The electrolyte or electrolytic solution may be a non-aqueous electrolytic solution (non-aqueous organic solvent) using carbonate, ester, ether or ketone alone or in a mixture of two or more thereof, but are not limited thereto. For example, dimethyl carbonate, diethyl carbonate, dipropyl carbonate, methylpropyl carbonate, ethylpropyl carbonate, methyl ethyl carbonate, ethylene carbonate, propylene carbonate, butylene carbonate, γ-butyrolactone, n-methyl acetate, n-ethyl acetate, n-propyl acetate, triester of phosphoric acid, dibutyl ether, N-methyl-2-pyrrolidone, 1,2-dimethoxy ethane, tetrahydrofuran derivatives such as 2-methyl tetrahydrofuran, dimethyl sulfoxide, formamide, dimethylformamide, dioxolane and its derivatives, acetonitrile, nitromethane, methyl formate, methyl acetate, trimethoxy methane, sulfolane, methyl sulfolane, 1,3-dimethyl-2-imidazolidinone, methyl propionate, ethyl propionate and other non-hydrogen bonding organic solvents may be used, but are not limited thereto.

The electrolytic solution may further contain a lithium salt (so-called, lithium salt-containing non-aqueous electrolytic solution), and the lithium salt may be any of those that are easily soluble in the non-aqueous electrolytic solution, for example, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiPF₃(CF₂CF₃)₃, LiAlCl₄, CH₃SO₃Li, CF₃SO₃Li, (CF₃SO₂)₂NLi, lithium chloroborate, lower aliphatic carboxylic acid lithium, 4-phenyl borate lithium, lithium imide, etc., but are not limited thereto. The (non-aqueous) electrolytic solution may also contain additives for improving charging/discharging characteristics, flame retardancy, etc., for example, pyridine, triethyl phosphate, triethanolamine, crown ether, ethylene diamine, glyme compounds, hexafluorophosphate triamide, nitrobenzene derivatives, sulfur, quinone imine dyes, N-substituted oxazolidinone, N,N-substituted imidazolidine, ethylene glycol dialkyl ether, ammonium salt, pyrrole, 2-methoxy ethanol, aluminum trichloride, etc. If necessary, halogen-containing solvents such as carbon tetrachloride and trifluoroethylene may be further included to impart non-flammability and carbon dioxide gas may be further included to improve high-temperature storage characteristics.

Meanwhile, the secondary battery can be fabricated according to conventional methods in the field. For example, a porous separator can be inserted between the anode and the cathode, and a non-aqueous electrolytic solution can be injected to fabricate it. The secondary battery according to the present invention can be used especially suitably as a unit battery of a battery module that is a power source of a medium-to-large-sized device, as well as being applied to a battery cell that is used as a power source of a small-sized device. In this regard, the present invention also provides a battery module including two or more (serially or parallelly) electrically connected secondary batteries. The number of secondary batteries included in the battery module can be variously adjusted considering the purpose and capacity of the battery module, of course.

Furthermore, the present invention provides a battery pack electrically connected to the battery module according to conventional techniques in the field. The battery module and the battery pack can be used as a power source for one or more medium-to-large-sized devices, such as power tools; electric vehicles including electric vehicles (EV), hybrid electric vehicles (HEV), and plug-in hybrid electric vehicles (PHEV); electric trucks; electric commercial vehicles; or power storage systems, but are not limited thereto.

Although the present invention has been described with reference to preferred embodiments as described above, it will be readily understood by those skilled in the art that the present invention is not limited thereto and that various modifications and variations are possible without departing from the concept and scope of the patent claims set forth below.

### [Example 1] Fabrication of an Electrode Assembly

As shown in FIGS. 3 and 4, an electrode assembly having an electrode tab bonding structure was fabricated, wherein the electrode tabs include A-type electrode tabs located bias to the left of the center line of the longitudinal direction of the center bonding portion between the electrode tabs; and B-type electrode tabs located bias to the right of the center line; wherein the A-type electrode tabs and the B-type electrode tabs are alternately positioned, and the A-type electrode tabs and the B-type electrode tabs are partially overlapped to form the center bonding portion, and the remaining portions of the A-type electrode tabs and the B-type electrode tabs that do not form the center bonding portion form a structure in which side bonding portions each with the same type of electrode tabs are formed, and the A-type electrode tabs and B-type electrode tabs each have a structure in which a polymer layer is interposed between two metal layers.

### [Comparative Example 1] Fabrication of an Electrode Assembly

As shown in FIGS. 1 and 2, an electrode assembly was fabricated by simply stacking and bonding electrode tabs of resin collectors with a polymer layer interposed between two metal layers in a conventional manner.

### [Experimental Example 1] Measurement of Electrical Resistance between Electrode Tabs and Lead Tabs

First, based on the electrode tab stacking direction of the electrode assembly fabricated in Example 1, a lead tab was placed at the outermost edge of the electrode tab assembly including the A-type electrode tabs and the B-type electrode tabs, and then welded to measure the electrical resistance between the electrode tabs and the lead tab.

Separately, a lead tab was placed at the outermost edge of the electrode assembly fabricated in comparative example 1, and then welded to measure the electrical resistance between the electrode tabs and the lead tab.

As a result of the measurement, when using the electrode assembly fabricated in comparative example 1, the electrical resistance between the electrode tabs and the lead tab was measured to be 0.12 to 0.16 ohm, whereas when using the electrode assembly fabricated in Example 1, the electrical resistance between the electrode tabs and the lead tab was measured to be 0.05 to 0.07 ohm.

Therefore, it can be seen that by using the electrode assembly of the present invention, which stacks different shapes of electrode tabs alternately to form the conduction structure, conduction of electrons in the electrode stacking direction can be smoothly performed even in the presence of a polymer layer.

### [Explanation of reference numerals]

100: Unit cell
200: Electrode tab
200a, 200a': A type electrode tabs
200b, 200b': B type electrode tabs
300: Leads tab

## Claims

1. An electrode assembly having an electrode tab bonding structure, comprising:
A-type electrode tabs located bias to the left of a center line of a longitudinal direction of a center bonding portion between electrode tabs; and
B-type electrode tabs located bias to the right of the center line,
wherein the A-type electrode tabs and the B-type electrode tabs are alternately positioned, and the A-type electrode tabs and the B-type electrode tabs are partially overlapped to form the center bonding portion,
wherein remaining portions of the A-type electrode tabs and the B-type electrode tabs that do not form the center bonding portion form a structure in which side bonding portions each with a same type of electrode tabs are formed, and
wherein the A-type electrode tabs and B-type electrode tabs each have a structure in which a polymer layer is interposed between two metal layers.

2. The electrode assembly having an electrode tab bonding structure of claim 1, wherein the same type of electrode tabs are pressed together to form a side bonding portion, and a different type of electrode tabs are interposed therebetween, and the metal layers included in each of the same type of electrode tabs contact each other at the side bonding portion.

3. The electrode assembly having an electrode tab bonding structure of claim 2, wherein the same type of electrode tabs contact each other through the metal layer at the side bonding portion, and the different type of electrode tabs contact each other through the metal layer at the center bonding portion, and
wherein a continuous conduction structure is formed between all the electrode tabs including the A-type electrode tabs and the B-type electrode tabs.

4. The electrode assembly having an electrode tab bonding structure of claim 1, wherein at least one of the A-type electrode tabs and the B-type electrode tabs are provided in an even number.

5. The electrode assembly having an electrode tab bonding structure of claim 1, wherein the A-type electrode tabs and the B-type electrode tabs extend and protrude from an electrode collector included in each unit cell of the electrode assembly, and the electrode collector also has a structure in which a polymer layer is interposed between two metal layers.

6. The electrode assembly having an electrode tab bonding structure of claim 1, wherein a lead tab is disposed at an outermost edge of an electrode tab assembly including the A-type electrode tabs and the B-type electrode tabs or between the electrode tab assemblies with respect to the stacking direction of the electrode tabs.

7. The electrode assembly having an electrode tab bonding structure of claim 6, wherein a leading edge of the side bonding portion is positioned coincident with either end of the lead tab.

8. The electrode assembly having an electrode tab bonding structure of claim 6, wherein the A-type electrode tabs and the B-type electrode tabs are each overlapped with each other by a width of more than 50% and no more than 80% based on a width of the lead tab.

9. The electrode assembly having an electrode tab bonding structure of claim 6, wherein the lead tab is in contact with one of the A-type electrode tabs and one of the B-type electrode tabs facing thereto.

10. A secondary battery comprising:
the electrode assembly having the electrode tab bonding structure of claim 1; and
an accommodating case for receiving the electrode assembly.
